(19) Europäisches Patentamt / European Patent Office / Office européen des brevets

(11) **EP 1 804 439 A1**

(12) **EUROPEAN PATENT APPLICATION**

(43) Date of publication:
04.07.2007 Bulletin 2007/27

(51) Int Cl.:
*H04L 12/56* (2006.01)

(21) Application number: 06301296.7

(22) Date of filing: 27.12.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.01.2006 US 324534**

(71) Applicant: **Alcatel Lucent**
**75008 Paris (FR)**

(72) Inventors:
• **Sorrini, Piero**
**Ottawa Ontario K2K 3E2 (CA)**
• **Susilo, Gatot**
**Kanata Ontario K2K 3A7 (CA)**
• **Fischer, John**
**Stittsville Ontario K2S 1E3 (CA)**

(74) Representative: **Hervouet, Sylvie et al**
**Feray Lenne Conseil,**
**39/41, avenue Aristide Briand**
**92163 Anthony Cedex (FR)**

(54) **Providing services over hybrid networks**

(57) In hybrid networks (200), there are different schemes to identify traffic. ATM networks (210) identify traffic on two levels. The present invention provides a method and apparatus of identifying traffic in a hybrid network (200) on two or more levels. The method comprises mapping, at each level, the identifiers for identifying traffic in one network (210) to identifiers for identifying traffic in an other network (240). The apparatus comprises an input module for receiving identifiers for identifying traffic on two or more levels for one of the networks; a mapping module for creating a map (235) which for each level of identifier, maps the identifiers received to identifiers for another network.

**FIG. 2**

EP 1 804 439 A1

## Description

### Field of the Invention

The present invention relates to communicating over networks having different identification schemes.

### Background

DSL (Digital Subscriber Line) services are conventionally provided over ATM (Asynchronous Transfer Mode) networks and may be managed on a per-service and a per-customer basis. For example, each service is assigned a VPI (Virtual Path Identifier) and for each VPI, there is a list of customers, each customer being assigned a VCI (Virtual Circuit Identifier). Examples of services include, but are not limited to, Internet services, video, audio, television, and VoIP (Voice over Internet Protocol).

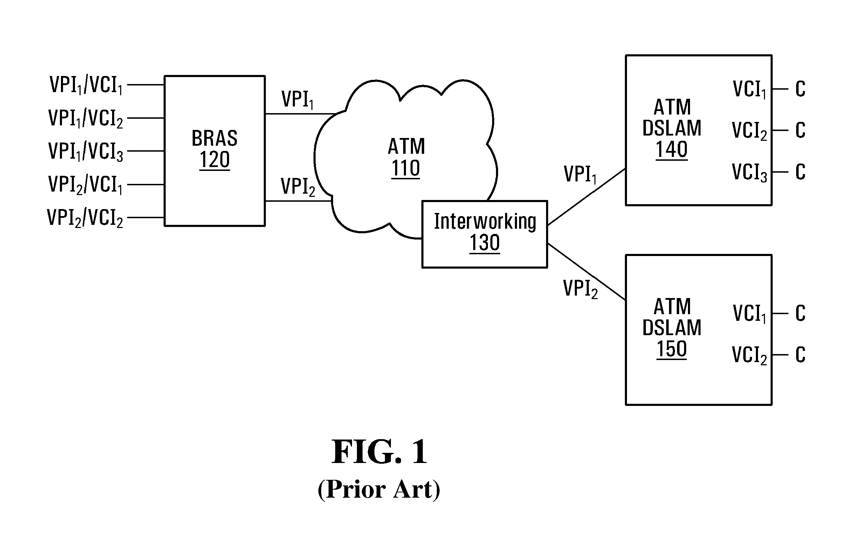

An example of an ATM DSL services solution is shown in Figure 1. Traffic between one or more service provider and a plurality of customers (C) enters an ATM network 110 through a BRAS (Broadband Remote Access Server) 120 on the service provider side and through a router/switch 130 on the customer side. ATM DSLAMs (DSL Access Multiplexers) 140 and 150 are located between the interworking network element 130 and the customers (C). A DSLAM receives signals from multiple customer Digital Subscriber Line (DSL) connections and puts the signals on a high-speed backbone line using multiplexing techniques. Depending on the product, DSLAM multiplexers connect DSL lines with some combination of asynchronous transfer mode (ATM), frame relay, or Internet Protocol networks. Each ATM DSLAM may support several services and supports a plurality of customers. PVP (Permanent Virtual Path) or S-PVP (Switched-Permanent Virtual Path) is provisioned for each type of service provided to each ATM DSLAM 140 or 150. Each PVP or S-PVP is identified by a virtual path identifier (VPI). Typically, the path to each ATM DSLAM is identified with its own VPI, but in some cases, more than one ATM DSLAM can have the same VPI. A virtual circuit, identified by a virtual circuit identifier (VCI) is provisioned for each customer (C) of the ATM DSLAMs 140 and 150. The ATM DSLAMs direct traffic to the appropriate customer (C) based on the VCI.

In the example of Figure 1, there are two VPIs, $VPI_1$, and $VPI_2$, which identify the paths to the ATM DSLAMs 140 and 150 respectively. The ATM DSLAM 140 supports three customers, identified by $VCI_1$, $VCI_2$ and $VCI_3$. The ATM DSLAM 150 supports two customers identified by $VCI_1$ and $VCI_2$. Traffic is thus identified with a VPI/VCI according to which ATM DSLAM and which customer it is directed.

Traffic in an Ethernet is identified by a VLAN (Virtual Local Area Network) identifier or tag in the header of an Ethernet frame. A standard Ethernet frame can include stacked VLAN tags.

Hybrid networks comprised of two or more networks that identify traffic using different protocols also exist. For example, a hybrid network may be made up of an ATM network and an Ethernet. Another example of a hybrid network is a network comprised of an MPLS (Multiple Protocol Labelling System) network and an Ethernet. Any combination of ATM, Ethernet, IP (Internet Protocol), MPLS, etc may make up a hybrid network.

### Summary of the Invention

In one aspect of the present invention, there is provided a method of identifying traffic in a hybrid network, the hybrid network comprising two or more networks having different schemes for identifying traffic on two or more levels, the method comprising: mapping, at each level, the identifiers for identifying traffic in one network to identifiers for identifying traffic in an other network.

In another aspect of the present invention, there is provided a computer readable medium having computer readable instructions stored thereon that when executed by a computer implement any of the methods described herein.

In another aspect of the present invention, there is provided an apparatus for mapping traffic identifiers in a hybrid network, the hybrid network comprising two or more networks having different schemes for identifying traffic on two or more levels, the apparatus comprising: an input module for receiving identifiers for identifying traffic on two or more levels for one of the networks; a mapping module for creating a map which for each level of identifier, maps the identifiers received to identifiers for another network.

Embodiments of the present invention enable traffic in a hybrid network to be identified on two or more levels in a uniform manner, regardless of the identification scheme of the various networks that make up the hybrid network. For example, in a hybrid network comprised of an ATM network and an Ethernet, DSL traffic within the ATM network can be identified by VPI/VCI at the service provider end. The VPI/VCI DSL traffic directed to customers over the Ethernet will be mapped to a two level VLAN identifier. For example, the VLAN identifier could be comprised of an S-VLAN/C-VLAN identifier (where S is for service, and C is for customer).

Other aspects and features of the present invention will become apparent, to those ordinarily skilled in the art, upon review of the following description of the specific exemplary embodiments of the invention.

### Brief Description of the Drawings

Exemplary embodiments of the invention will now be described in greater detail with reference to the accompanying drawings, in which:

Figure 1 is a block diagram of a conventional ATM network for delivering DSL services;

Figure 2 is a block diagram of a hybrid network in accordance with one embodiment of the present invention;

Figure 3 is a block diagram of a hybrid network in accordance with one embodiment of the present invention;

Figure 4 is a flowchart of a method for identifying traffic in accordance with one embodiment of the present invention;

Figure 5 is a flowchart of a method for identifying traffic in accordance with one embodiment of the present invention;

Figure 6 is a flowchart of a method for identifying traffic in accordance with one embodiment of the present invention;

Figure 7 is a block diagram of an apparatus for identifying traffic in accordance with one embodiment of the present invention; and

Figure 8 is a diagram of a map in accordance with one embodiment of the present invention.

**Description of Embodiments**

Throughout this description, the expressions "map", "mapped" and "mapping" are used to refer to any association, allocation or assignment of one identifier to another identifier.

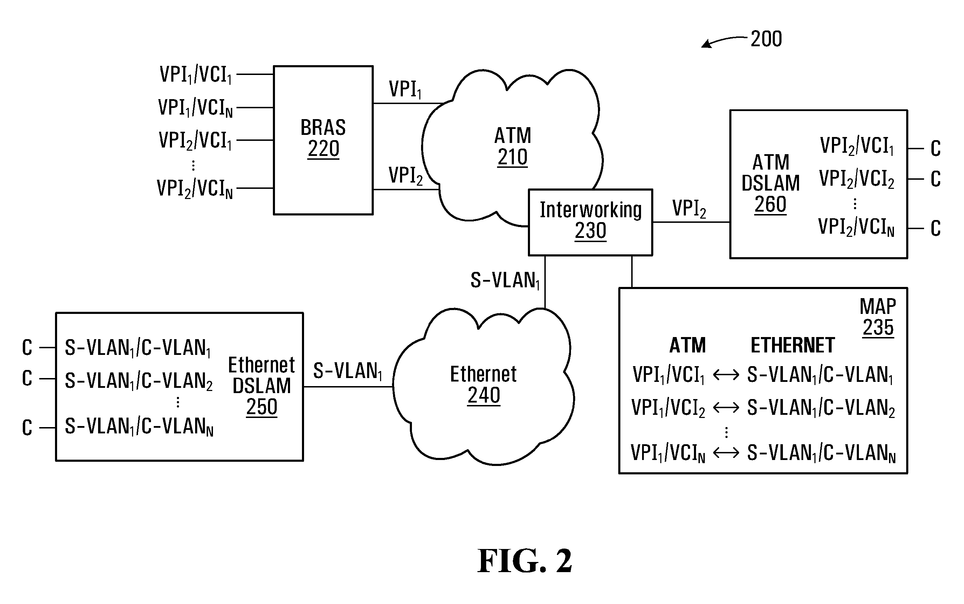

An ATM DSLAM to Ethernet DSLAM migration scenario according to one embodiment of the present invention is shown in Figure 2. A hybrid network 200 comprises an ATM network 210 and an Ethernet 240. An ATM DSLAM 260 connects customers to the ATM network 210 through an interworking network element 230, and an Ethernet DSLAM 250 connects customers to the Ethernet 240, which is in turn connected to the ATM network 210 through the interworking network element 230. The ATM DSLAM 260 is identified by $VPI_1$ and the Ethernet DSLAM is identified by $SVLAN_1$. DSL service providers connect to the ATM network 210 through a BRAS 220. Thus, the Ethernet DSLAM 250 has connectivity to the BRAS 220 through the ATM network 210 and the Ethernet network 240 via the interworking network element 230. The interworking network element 230 provides an interworking function between the ATM network 210 and the Ethernet network 240 for data packet traffic flowing between the BRAS 220 and the Ethernet DSLAM 250. An interworking function provides the means for two different technologies to interoperate.

In some embodiments the Ethernet 240 is a metro Ethernet. In some embodiments, the Ethernet DSLAM 250 is an IP DSLAM. Examples of the interworking network element 230 include a node, switch, router, switch/router, as well as other network elements.

For ease of management and deployment it is desirable to keep the same paradigm as all ATM DSL solutions with respect to connection management and customer provisioning, such where the service type is identified with a VPI and the customer is identified with a VCI. To that end, some embodiments of the present invention use stacked VLAN tags with one VLAN ID for each service type (S-VLAN) and another for each customer (C-VLAN). In embodiments where Ethernet frames allocate 12 bits to VLAN IDs, the maximum number of C-VLANs per S-VLAN will be approximately 4,000. The interworking network element 230 has access to a map 235 which maps data packets received from one VPI/VCI to the appropriate S-VLAN/C-VLAN, and vice versa. For example, data packets of $VPI_2/VCI_1$ would be mapped to $S\text{-}VLAN_1/C\text{-}VLAN_1$. In some embodiments the map 235 is maintained on the interworking network element 230. The map 235 is updated with the addition and removal of services and DSLAMS.

For PVP in the embodiment of Figure 2, each node is individually configured to create the necessary cross-connects for the path. For the path to the Ethernet DSLAM 250, a cross-connect on the interworking network element 230 is made between an endpoint (EP1) connecting to VPI2 on the ATM network 210 side to an endpoint (EP2) connecting to S-VLAN1 at the Ethernet network 240 side. The interworking network element 230 is configured by provisioning the path, for example, as follows:

```
EP1 = 1-3-1-1; VPI2


EP2 = 1-5-1-1; V1


#cust = 100


#starting VCI = 32
```

In this example, 1-3-1-1 is a port number for endpoint EP1, VPI2 is a VPI number for endpoint EP1, 1-5-1-1 is a port number for endpoint EP2, and V1 is a VLAN ID for EP2. Then a mapping table is automatically generated for mapping 100 C-VLANs for S-VLAN1 to 100 VCIs, starting at VCI32 for VPI2.

In another approach, destination configuration endpoints are added to the network. For example they can be added to the network 200 described with reference to Figure 2 at the interworking network element 230 on the side linking to the Ethernet 240 and on the side linking to the ATM DSLAM 260. These destination configuration endpoints are used for provisioning parameters that can not be provisioned using signalling, such as in the case where S-PVPs are used. Destination configuration endpoints are configured locally. An example of how a destination configuration endpoint (EP3) is provisioned for a S-PVP is:

```
EP3 =  1-5-1-1; V5


 # customer = X


 # starting VCI = Y
```

In this case a mapping table is generated at the interworking network element mapping X VCIs starting at VCI Y to X C-VLAN IDs for EP3.

An advantage of using destination configuration endpoints is that the provisioning of an S-PVP can be changed without affecting services carried on it. For example, another set of VCIs for new customers can be added to the S-PVP by provisioning at the destination configuration endpoint. Furthermore, it is unnecessary to change the signalling protocol.

In other cases, extra information is embedded in the signalling. IEs (Information Elements) can be modified or new IEs can be added. In some cases, new IEs are used in conjunction with, for example, the PNNI modify request message. This technique does not require connect/re-connect actions which would be service affecting in order to implement provisioning changes to S-PVPs. Adding new IEs would require modifications to the standards. For instance, Generic Identifier Transport (GIT) information element may be used to describe the correlation of mapping between VCI and C-VLAN in the interworking node as the destination node.

Embodiments of the present invention are applicable to interworking other types of dissimilar networks, such as MPLS and Ethernet for the purposes of providing DSL services. In these cases, the general concept is the same. Hierarchical VLAN IDs for identifying traffic of the Ethernet on a per-service and per-customer basis are provided and then mapped at an interworking network element between the networks to a corresponding hierarchical arrangement of connections or pseudo-wire connections.

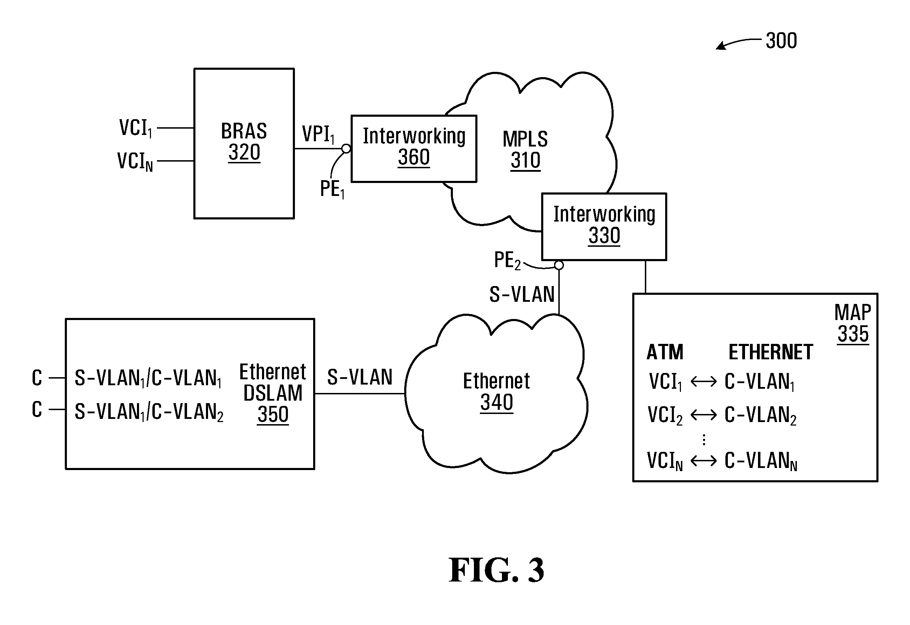

Figure 3 is a block diagram of one embodiment of the present invention in which an MPLS network and an Ethernet are interworked. A hybrid network 300 comprises and an MPLS network 310 and an Ethernet 340.

An Ethernet DSLAM 350 connects customers to the Ethernet 340, which is in turn connected to the MPLS network 310 through an interworking network element 330. The Ethernet DSLAM is identified by $SVLAN_1$. DSL service providers connect to the MPLS network 310 through a BRAS 320. The BRAS 320 is connected to the MPLS network 310 through an interworking network element 360. Thus, the Ethernet DSLAM 350 has connectivity to the BRAS 320 through the MPLS network 310 via interworking network element 330, the Ethernet network 340 and the interworking network element 320. The interworking network element 330 provides an interworking function between the MPLS network 310 and the Ethernet network 340 for data packet traffic flowing between the BRAS 320 and the Ethernet DSLAM 350. The interworking network element 360 provides an interworking function between the BRAS 320 and the MPLS 310. In some embodiments, the BRAS 320 is an ATM BRAS. There are two PEs (Provider Edges): one between the BRAS and MPLS network (PE1) and another between the MPLS network and Metro-Ethernet network (PE2). In this case, a VPI on PE1 facing the ATM BRAS and an S-VLAN on PE2 facing the Metro-Ethernet network are connected as VP-level ATM pseudo-wires. In the MPLS network 310, there are two MPLS labels: the outer label corresponds to the tunnel LSP and the inner label corresponds to the VP - S-VLAN connection. In some cases, the inner label is called a Pseudo-wire (PW) label. The outer label is managed by MPLS signalling.

One embodiment of the invention provides mapping of VPI to PW label at PE1. The PW label is used across the MPLS network 310 and the VCI is carried across the MPLS network 310. Then at PE2, the PW label is mapped to a S-VLAN and the VCI is mapped to a C-VLAN to produce a map 335 from MPLS/ATM identifiers to Ethernet identifiers for the customers. In this case the sequence of mapping is: VPI/VCI => PW label/VCI => S-VLAN/C-VLAN.

Another embodiment is adapted to provide a mapping of VCI to C-VLAN at PE1, in addition to the mapping of VPI to PW label. Then at PES the PW label can be mapped to a S-VLAN. In this embodiment, the sequence of mapping is: VPI/VCI => PW label/C-VLAN => S-VLAN/C-VLAN.

In another embodiment of the present invention, an Ethernet VLAN BRAS is used and an MPLS network interconnects the BRAS and an Ethernet network. There are two PEs: one between the BRAS and MPLS network and another one between MPLS Network and Metro-Ethernet network. In this case, an S-VLAN facing the Ethernet VLAN BRAS and an S-VLAN facing the Ethernet network are connected as an ethernet pseudo-wire. In the MPLS network, there are three MPLS labels: 1) the outer label corresponding to a tunnel LSP, 2) the first inner label corresponding to the S-VLAN and 3) the second inner (innermost) label corresponding to the C-VLAN. The two PEs perform mapping of the inner label to S-VLAN and mapping of the innermost label to the C-VLAN in similar manner as VCI - C-VLAN mapping described with reference to Figures 2 and 3. Unlike the outer label and the first inner label, which are typically platform-wide labels allocated by PEs, the innermost label is unique within each first inner label. This allows scalability capabilities on PEs with respect to managing the innermost label. In this S-VLAN identifiers are used at the BRAS.

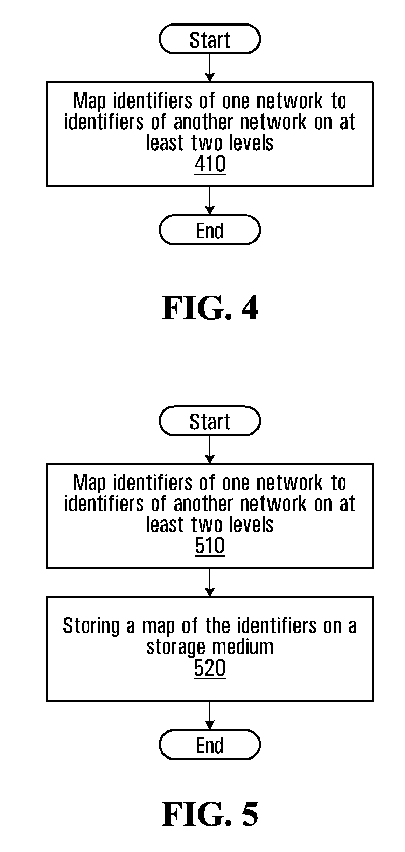

Figure 4 is a flowchart of a method of identifying traffic in a hybrid network. The hybrid network comprises two or more networks having different schemes for identifying traffic on two or more levels. Step 410 of the method comprises mapping at each level, the identifiers for identifying traffic in one network to identifiers for identifying traffic in another network.

In some embodiments, one level of the identifiers of at least one of the networks identifies a service type of the traffic. In some cases, one level of the identifiers of at least one of the networks identifies a customer.

In some embodiments, one level of the identifiers of at least one of the networks is mapped to a VPI (Virtual Path Identifier) in another network. In some cases, the VPI represent a service type. Types of service include, but are not limited to internet service, video, television, audio, and VoIP.

In some embodiments, one level of the identifiers of at least one of the networks is mapped to a VCI (Virtual Circuit Identifier) in another network. In some cases, the VCI represents a customer.

Figure 5 is a flowchart of a method of identifying traffic in a hybrid network in accordance with one embodiment of the present invention. The hybrid network comprises two or more networks having different schemes for identifying traffic on two or more levels. Step 510 is the same as step 410 described with reference to Figure 4. Step 520 is storing a map of the traffic identifiers on a storage medium.

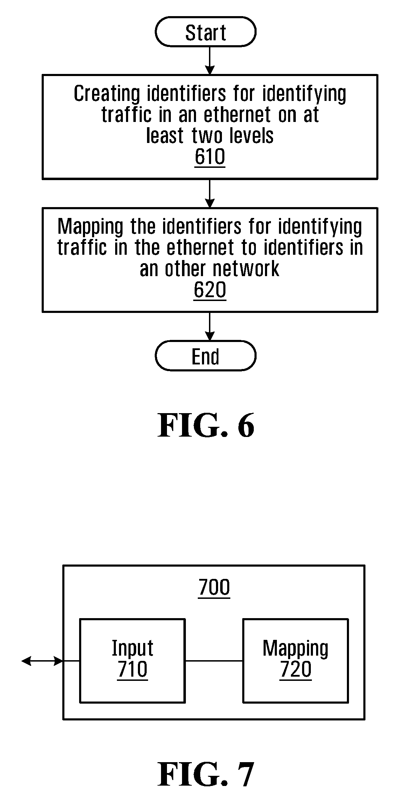

Figure 6 is a flowchart of a method of identifying traffic in a hybrid network in accordance with one embodiment of the present invention. The hybrid network comprises two or more networks having different schemes for identifying traffic on two or more levels, one of those networks being an Ethernet. Step 610 creates identifiers for identifying traffic in the Ethernet network on two or more levels. Step 620 maps the identifiers for identifying traffic in the Ethernet to identifiers for identifying traffic in another network.

In some embodiments, in each network, one level of identifiers is a subset of another level of identifiers.. In some embodiments, the Ethernet identifiers are VLAN IDs (Virtual Local Area Network Identifiers) stacked in Ethernet frames.

Methods in accordance with embodiments of the present invention can be implemented on any hybrid network. In exemplary embodiments, the networks making up the hybrid network are selected from the group consisting of: an ATM (Asynchronous Transfer Mode) network; an Ethernet; an IP (Internet Protocol) network;

a VLAN (Virtual Local Area Network); and an MPLS (Multiple Protocol Labelling System) network.

In a preferred embodiment, the method is applied to DSL subscriber access. In such a case, the traffic is DSL traffic. However, embodiments of the present invention are not limited to DSL subscriber access. Other types of subscriber access include, but are not limited to digital cable, and wireless communications.

The methods of embodiments of the present invention can be implemented in hardware, software or combination thereof. Some embodiments comprise a computer readable medium having computer readable instructions stored thereon that when executed by a computer implement any of the methods described herein.

Figure 7 is a block diagram of an apparatus 700 for mapping traffic identifiers in a hybrid network. The hybrid network comprises two or more networks having different schemes for identifying traffic on two or more levels. The apparatus 700 comprises an input module 710 and a mapping module 720. The input module 710 is for receiving identifiers for identifying traffic on two or more levels for one of the networks. The mapping module 720 is for creating a map which for each level of identifier. The mapping module 720 maps the identifiers received to identifiers for another network. The apparatus 700 can be part of a network element in a hybrid network, such as a node, switch, router, switch/router, etc.

In some embodiments, the apparatus 700, further comprises an identifier creation module for creating identifiers on two or more levels for traffic in the other network.

In some embodiments, the apparatus further comprises an output module for outputting the map to a user interface. In some embodiments, the apparatus 700, further comprises the user interface.

In some embodiments, the apparatus 700, further comprises a switching module for directing traffic according to the identifiers of either of the networks.

In some embodiments, the mapping module 720 maps VPIs and VCIs from an ATM to stacked VLAN (Virtual Local Area Network) identifiers for an Ethernet.

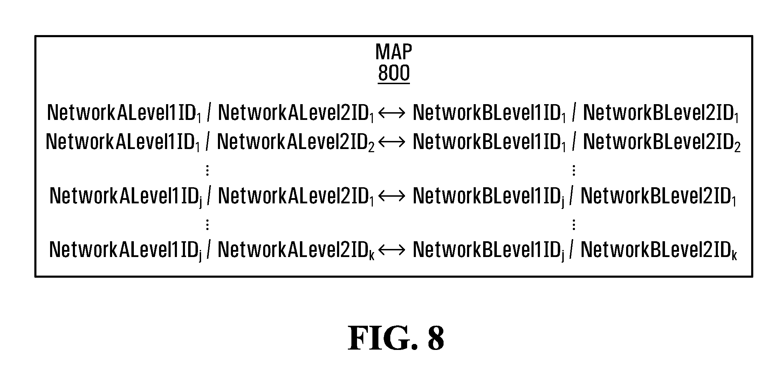

Figure 8 is a block diagram of a map 800 in accordance with one embodiment of the present invention. It comprises identifiers from a first network, Network A, each identifier comprising two levels of identifiers, Level1 and Level 2. Each identifier from Network A is mapped to a two level identifier in Network B. For example, the identifier NetworkALevel1ID1/NetworkALevel2ID1 is mapped to NetworkBLevel1ID1/NetworkBLevel2ID1. The number of IDs for Level 1 of each network is any number from 1 to j, where j is a positive integer. The number of Level2 IDs of each network is any number from 1 to k, where k is a positive integer. In some networks, the identifiers are sent in the header of a frame and are allotted a certain number of bits. If the number of bits allotted is 12, as with VLAN IDs in an Ethernet frame, then j or k would be approximately 4000.

The map 800 is stored on a machine readable storage medium and accessible by a network element that must direct traffic from one network to another. Examples of such an interworking network element are described with reference to Figures 2 and 3. In some embodiments, the map 800 is located on the interworking network element. In other embodiments, the map is generated by the interworking network element.

What has been described is merely illustrative of the application of the principles of the invention. Other arrangements and methods can be implemented by those skilled in the art without departing from the spirit and scope of the present invention.

**Claims**

1. A method of identifying traffic in a hybrid network, the hybrid network comprising two or more networks having different schemes for identifying traffic on two or more levels, the method comprising:

    mapping, at each level, the identifiers for identifying traffic in one network to identifiers for identifying traffic in an other network.

2. The method of claim 1, wherein at least one of the networks is an Ethernet network and further comprising creating identifiers for identifying traffic in the Ethernet network on two or more levels.

3. The method of claim 1 or 2, further comprising storing a map of the traffic identifiers on a storage medium.

4. The method of claim 2 or 3, wherein, in each network, one level of identifiers is a subset of another level of identifiers.

5. The method of any one of claims 1 to 4, wherein a level of the identifiers of at least one of the networks identifies a service type of the traffic.

6. The method of any one of claims 1 to 5, wherein a level of the identifiers of at least one of the networks is mapped to a VPI (Virtual Path Identifier) in an other network.

7. The method of any one of claims 1 to 6, wherein a level of the identifiers of at least one of the networks identifies a customer.

8. The method of any one of claims 1 to 7, wherein a level of the identifiers of at least one of the networks is mapped to a VCI (Virtual Circuit Identifier) in another network.

9. The method of claim 2, wherein the Ethernet identifiers are VLAN IDs (Virtual Local Area Network Identifiers) stacked in Ethernet frames.

10. The method of any one of claims 1 to 9, wherein the networks are selected from the group consisting of: an ATM (Asynchronous Transfer Mode) network; an Ethernet; an IP (Internet Protocol) network; a VLAN (Virtual Local Area Network); and an MPLS (Multiple Protocol Labelling System) network.

11. The method of any one of claims 1 to 9, wherein the traffic is DSL (Digital Subscriber Line) traffic.

12. A computer readable medium having computer readable instructions stored thereon that when executed by a computer implement the method of any one of claims 1 to 11.

13. An apparatus for mapping traffic identifiers in a hybrid network, the hybrid network comprising two or more networks having different schemes for identifying traffic on two or more levels, the apparatus comprising:

    an input module for receiving identifiers for identifying traffic on two or more levels for one of the networks;
    a mapping module for creating a map which for each level of identifier, maps the identifiers received to identifiers for another network.

14. The apparatus of claim 13, further comprising an identifier creation module for creating identifiers on two or more levels for traffic in the other network.

15. The apparatus of claim 13 or 14, further comprising an output module for outputting the map to a user interface.

16. The apparatus of claim 15, further comprising the user interface.

17. The apparatus of any one of claims 13 to 16, further comprising a switching module for directing traffic according to the identifiers of either of the networks.

18. The apparatus of any one of claims 13 to 17, wherein the networks are selected from the group consisting of: an ATM (Asynchronous Transfer Mode) network; an Ethernet; an IP (Internet Protocol) network; a VLAN (Virtual Local Area Network); and an MPLS (Multiple Protocol Labelling System) network.

19. The apparatus of any one of claims 13 to 17, wherein identifiers received comprise VPIs (Virtual Path Identifiers) and VCIs (Virtual Circuit Identifiers).

20. The apparatus of claim 19, wherein the mapping module maps the VPIs and VCIs to VLAN (Virtual Local Area Network) identifiers.

**FIG. 1**

**(Prior Art)**

EP 1 804 439 A1

**FIG. 2**

**FIG. 3**

Start

Map identifiers of one network to
identifiers of another network on at
least two levels
410

End

# FIG. 4

Start

Map identifiers of one network to
identifiers of another network on at
least two levels
510

Storing a map of the identifiers on a
storage medium
520

End

# FIG. 5

Start

Creating identifiers for identifying
traffic in an ethernet on at
least two levels
<u>610</u>

Mapping the identifiers for identifying
traffic in the ethernet to identifiers in
an other network
<u>620</u>

End

# FIG. 6

<u>700</u>

Input
<u>710</u>

Mapping
<u>720</u>

# FIG. 7

FIG. 8

EP 1 804 439 A1

**European Patent Office**

**EUROPEAN SEARCH REPORT**

Application Number

EP 06 30 1296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHN RUTEMILLER DANIEL PROCH MARCONI COMMUNICATIONS NEIL HARRISON BRITISH TELECOM: "PWE3: ATM Cell Encapsulation draft-rutemiller-pwe3-atm-encaps-00.txt" IETF STANDARD-WORKING-DRAFT, INTERNET ENGINEERING TASK FORCE, IETF, CH, June 2002 (2002-06), XP015005122 ISSN: 0000-0004 | 1,3,5,6, 8,10, 12-14, 17,19 | INV. H04L12/56 |
| Y | * page 4, paragraph 3 - page 5, paragraph 3.1; figure 1 * | 2,4,7,9, 11 | |
| A | * page 8, line 14 - line 24 * * page 13, paragraph 7 * * page 30, paragraph 11.1 - page 31, paragraph 11.1.1 * | 15,16 | |
| | ----- | | |
| X | CY LEE S CIRKOVIC ALCATEL M SUZUKI NTT A IWATA NEC: "Hybrid Virtual Private LAN Service <draft-lee-ppvpn-hybrid-vpls-01.txt>" IETF STANDARD-WORKING-DRAFT, INTERNET ENGINEERING TASK FORCE, IETF, CH, no. 1, June 2003 (2003-06), XP015004126 ISSN: 0000-0004 | 1,2,5,7, 9,10,14, 17,18 | |
| | | | TECHNICAL FIELDS SEARCHED (IPC) |
| Y | * page 1, paragraph ABSTRACT - page 8, paragraph 4.; figures 1-3 * | 2,4,7,9, 11 | H04L |
| A | * page 14, paragraph 6.1.2.1 - page 16, paragraph 6.2.1.1 * | 3,4,15, 16 | |
| | ----- | | |
| | -/-- | | |

The present search report has been drawn up for all claims

| Place of search | Date of completion of the search | Examiner |
|---|---|---|
| Munich | 29 March 2007 | Fischer, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

EUROPEAN SEARCH REPORT

Application Number

EP 06 30 1296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 585 265 A (MCI INC [US]) 12 October 2005 (2005-10-12) | 4,7,9,11 | |
| A | * page 2, column 2, paragraph 8 - paragraph 9; figure 2 * * page 7, column 11, paragraph 40 * * page 8, column 13, paragraph 48 - page 9, column 15, paragraph 57 * * page 10, column 17, paragraph 65 * * page 10, column 18, paragraph 70 - page 13, column 23, paragraph 90; figures 3,4 * * page 24, column 46, paragraph 179; figure 13 * * page 25, column 47, paragraph 184 - page 26, column 49, paragraph 190; figures 15,16 * | 3,5,10, 15,16,20 | |
| P,X | MARC LASSERRE VACH KOMPELLA (EDITORS): "Virtual Private LAN Services Using LDP" IETF STANDARD-WORKING-DRAFT, INTERNET ENGINEERING TASK FORCE, IETF, CH, vol. l2vpn, no. 9, June 2006 (2006-06), XP015045170 ISSN: 0000-0004 | 1,2,5,7, 9,10, 12-14, 17,18 | |
| A | * page 3, paragraph 3 - page 5, paragraph 4; figure 1 * * page 10, paragraph 7.1 - page 11, paragraph 7.1 * * page 21, paragraph 11 - page 22, paragraph 11.1; figure 3 * | 4,11 | TECHNICAL FIELDS SEARCHED (IPC) |

The present search report has been drawn up for all claims

| Place of search | Date of completion of the search | Examiner |
|---|---|---|
| Munich | 29 March 2007 | Fischer, Erik |

# EP 1 804 439 A1

## ANNEX TO THE EUROPEAN SEARCH REPORT
## ON EUROPEAN PATENT APPLICATION NO.

EP 06 30 1296

29-03-2007

| Patent document cited in search report | | Publication date | Patent family member(s) | Publication date |
|---|---|---|---|---|
| EP 1585265 | A | 12-10-2005 | US    2005220014 A1 | 06-10-2005 |

For more details about this annex : see Official Journal of the European Patent Office, No. 12/82